# EUROPÄISCHE PATENTSCHRIFT

(11) **EP 1 636 068 B1**
(45) Veröffentlichungstag und Bekanntmachung des Hinweises auf die Patenterteilung: **10.09.2008**
(21) Anmeldenummer: 04731360.6
(22) Anmeldetag: 06.05.2004
(51) Int. Cl.: B60R 13/02, B60J 5/04, B60R 13/08

(54) **TÜRMODUL FÜR FAHRZEUGTÜR**
DOOR MODULE FOR VEHICLE DOOR
MODULE DE PORTE POUR PORTE DE VEHICULE

(30) Priorität: 06.06.2003 DE 10326154
(43) Veröffentlichungstag der Anmeldung: 22.03.2006
(73) Patentinhaber: Johnson Controls Interiors GmbH & Co. KG, 47929 Grefrath (DE)
(72) Erfinder: SCHRÖDER, Helmut, 47929 Grefrath (DE); SCHIDAN, Alexander, 42719 Solingen (DE); MIEGLITZ, Hans-Helmut, 40789 Monheim (DE); JOHN, Harald, 40489 Düsseldorf (DE); JONES, Derek, 53567 Buchholz (DE)
(74) Vertreter: Hemmelmann, Klaus
(86) Internationale Anmeldenummer: PCT/EP2004/004804
(87) Internationale Veröffentlichungsnummer: WO 2004/108481

(56) Entgegenhaltungen:
- WO-A-97/45283
- WO-A-03/031211
- WO-A-03/031233
- DE-A- 10 135 848
- DE-A- 19 712 266
- US-A1- 2002 027 376

## Beschreibung

Die Erfindung betrifft ein Türmodul für eine Fahrzeugtür, die in einen äußeren, der Rohbautür zugewandten Tür-Naßraum und einen inneren Tür-Trockenraum gedichtet unterteilt ist, mit am Türmodul im Tür-Trockenraum vormontiert gehalterten mechanischen und/oder elektrischen Funktionskomponenten, die mit im Tür-Naßraum angeordneten Türkomponenten mechanisch und/oder elektrisch verbindbar sind, wobei die Abdichtung zwischen Tür-Trockenraum und Tür-Naßraum durch eine Trennfolie gebildet wird, die von den Verbindungsmitteln der diesseits der Trennfolie am Türmodul gehalterten Funktionskomponenten gedichtet durchdrungen wird.

### Stand der Technik

Ein erstes Türmodul für eine Fahrzeugtür ist aus der Druckschrift DE 101 44 330 A1 bekannt. Die dort offenbarte Fahrzeugtür besteht aus einer Rohbautür und einem Türmodul, das seinerseits einen Modulträger und eine an diesem innenraumseitig befestigte Dekorverkleidung aufweist. Der Modulträger ist mit der Rohbautür derart gedichtet verbunden, dass die Fahrzeugtür in einen jenseits des Modulträger befindlichen, äußeren Tür-Naßraum und einen diesseits des Modulträger angeordneten, inneren Tür-Trockenraum unterteilt ist.

Am robust ausgeführten Modulträger sind mechanische und elektrische Funktionskomponenten, beispielsweise ein Türsteuergerät, gehalten, die über gleichfalls am Modulträger angeordnete Verbindungsmittel bei der Montage des Türmoduls in entsprechende Gegenstücke der Türkomponenten, beispielsweise eines elektrischen Fensterhebers, im Tür-Naßraum einsetzbar sind. Durch eine spezielle Ausbildung der Verbindungsmittel sowie der zugeordneten Gegenstücke erfolgt die elektrische oder mechanische Verbindung durch bloßen Fügen des Türmoduls mit der Rohbautür in Y-Richtung eines üblichen X, Y, Z-Koordinatensystems eines Kraftfahrzeugs, also durch eine horizontale, quer zur Fahrtrichtung verlaufende Bewegung. Nach dem Fügen des Türmoduls sind weitere Maßnahmen zur Koppelung von Funktions- und Türkomponenten in der Regel nicht mehr erforderlich. In Einzelfällen wird die Verbindung durch erstmalige Betätigung der Funktionskomponenten geschaffen.

Ein derartig ausgebildetes, vorgefertigtes Türmodul vereinfacht und verkürzt die Montage beim Fahrzeughersteller erheblich und wird den gestellten Anforderungen gerecht. Da der Modulträger jedoch nicht nur der Aufnahme von (schwergewichtigen) Funktionselementen im Tür-Trockenraum, sondern auch der Abdichtung zwischen Tür-Trocken- und Naßraum dient, ist er einerseits zur Aufnahme der mechanischen Kräfte entsprechend dickwandig auszubilden. Andererseits muß er den Tür-Naßraum vollständig überdecken, um die geforderte Dichtigkeit zu gewährleisten, und weist somit eine erhebliche Flächenerstreckung auf. Das Türmodul ist daher vergleichsweise schwer. Ferner sind derart steife plattenförmige Bauteile in ihren akustischen Eigenschaften in der Regel weniger zufriedenstellend.

Ein weiteres Türmodul wird im deutschen Gebrauchsmuster DE 296 07 664 U1 beschrieben. Auch bei dieser Fahrzeugtür dient ein steif ausgebildeter Aggregateträger in gleicher Weise der Trennung von Tür-Naß- und Trockenraum sowie der Halterung von Funktionselementen, die in trogartigen Vertiefungen des Aggregateträgers angeordnet sind. Bei dieser Ausführung ist der elektrische Antrieb eines Fensterhebers jedoch im Tür-Trockenraum angeordnet, so dass nur der gegen Feuchtigkeit unempfindlichere mechanische Scherenmechanismus des Fensterhebers im Tür-Naßraum untergebracht ist. Die Verbindung zwischen elektrischem Antrieb und Scherenmechanismus erfolgt in nicht näher beschriebener Weise mittels eines Bowdenzugs.

Dieses Türmodul weist die gleichen Nachteile wie der eingangs beschriebene Stand der Technik auf, ohne jedoch mit dem Vorzug der vereinfachten Montage versehen zu sein. Bei einer variantenreichen Ausbildung des Türmoduls sind die zur Aufnahme der Funktionselemente vorgesehenen, trogartigen Vertiefungen ferner für alle denkbaren Ausstattungen auszuformen, wodurch sich das Gewicht des Türmoduls nochmals erhöht.

Ein Türmodul wird in der Druckschrift WO 03/031233 A1 offenbart. Bei diesem wird die Trennung zwischen Trocken- und Naßbereich durch eine Kunststofffolie bewirkt, die zwischen der Metallstruktur der Fahrzeugtür und dem Innenverkleidungsteil angeordnet ist. Die Abdichtung zur Metallstruktur erfolgt über einen Dichtungswulst, beispielsweise eine geschäumte Dichtschnur, die gegebenenfalls mit einer speziellen Oberflächenbeschichtung versehen werden kann, um dem Eindringen von Feuchtigkeit durch Kapillarwirkung zu begegnen. Die Kunststofffolie wird ihrerseits durch Verkleben mit der nach außen gerichteten Seite des Innenverkleidungsteils verbunden und wird im Trockenraum angeordneten Funktionskomponenten gedichtet durchdrungen.

Durch diese Ausbildung wird eine vorteilhafte Trennung der Funktionen "Tragen von Bauteilen" und "Dichtung bzw. Akustik" erzielt. Die innenraumseitige, vergleichsweise große Fläche des Tür-Naßraums wird somit nur von der dünnwandigen und damit leichtgewichtigen Trennfolie überspannt.

Ein gattungsgmäßes Türmodul ist aus DE 10135848A bekannt.

### Aufgabe

Der Erfindung liegt die Aufgabe zugrunde, das gattungsgemäße Türmodul in der Weise weiterzuentwickeln, dass dessen Montage sowie die Abdichtung zwischen Tür-Trocken- und Naßraum nochmals vereinfacht werden.

### Lösung

Die Aufgabe wird durch ein Türmodul gemäß Anspruch 1 gelöst.

Durch dieses Vorgehen kann bei entsprechender Ausbildung von Trennfolie und Anpreßzone ein zusätzliches Abdichten mit plastischen Dichtstoffen oder umlaufenden Dichtprofilen überflüssig oder zumindest vereinfacht werden.

Der Begriff Trennfolie schließt wie im letztgenannten Stand der Technik grundsätzlich alle dünnwandigen, biegeweichen oder biegeschlaffen Flächenkörper ein, die gegebenenfalls auch eine dreidimensional geformte Struktur aufweisen können.

Nach einer ersten Ausführung der Erfindung sind die Funktionskomponenten und/oder die Verbindungsmittel zumindest teilweise unmittelbar an der zum Trockenraum weisenden Flächenseite einer Dekor-Innenverkleidung des Türmoduls angeordnet sind. Alternativ oder zusätzlich können diese auch auf einem oder mehreren Verstärkungselementen angeordnet werden, die ihrerseits mit der Dekor-Innenverkleidung des Türmoduls verbindbar ist. Derartige Verstärkungselemente sind in der Regel ohnehin zur Versteifung der Dekor-Innenverkleidung erforderlich und erhöhen insofern das Gewicht des Türmoduls nicht.

Vorzugsweise ist das Türmodul unter Ausbildung der mechanischen und/oder elektrischen Verbindung zwischen Funktions- und Türkomponenten in Y-Richtung mit der Rohbautür verrastbar, wie aus dem eingangs zitierten Stand der Technik bereits bekannt. Durch diese Ausbildung ist ein besonders rationelles und zuverlässiges Fügen von Türmodul und Rohbautür möglich.

Nach einer besonderen Ausführung der Erfindung ist die Trennfolie am Türmodul vormontiert und gemeinsam mit diesem an der Rohbautür anbringbar. Somit erfolgt die Kapselung des gesamten Tür-Trockenraums beim Lieferanten, während der Fahrzeughersteller nach dem Einbringen der Türkomponenten in die Rohbautür nur noch das mit der Trennfolie versehene Türmodul auf die Metallstruktur der Fahrzeugtür aufsetzen muß.

Eine zur Ausführung der Erfindung geeignete Anpreßzone kann beispielsweise sich nach außen, also in Richtung der Trennfolie erstreckende rippenartige Vorsprünge von Dekor-Innenverkleidung und/oder Verstärkungselement umfassen, auf deren Stirnseite die Trennfolie nach der Montage gepreßt wird. Bei besonders hohen Anforderungen an die Dichtigkeit kann die Anpreßzone auch zwei zueinander beanstandete Rippen aufweist, an welche die Trennfolie unter Einbringung eines Dichtmittels in den Abstand zwischen den Rippen anpreßbar ist. Dabei können die Dichtmittel beispielsweise jenseits der Rippen auf der Trennfolie angeordnet werden und bei der Montage des Türmoduls in Kontakt mit dem Türinnenblech bringbar sein. Die Dichtmittel umfassen vorzugsweise eine ggf. automatisiert auftragbare Dichtstoffraupe, die vor der Montage des Türmoduls mit einer abziehbaren Schutzfolie abdeckbar ist.
Eine bereits ohne zusätzliche Dichtmittel ausreichend Abdichtung kann mit einer Trennfolie erzielt werden, die zumindest eine Schicht aus einem geschlossenzelligen und damit wasserdichten Kunststoffschaum, insbesondere aus einem Polyolefin, vorzugsweise aus Polyethylen, umfaßt. Eine solche Folie kann beispielsweise eine Dicke von 3 bis 6 mm bei einem Raumgewicht von 30 bis 60 kg/m³ aufweisen, die bei der Montage örtlich auf etwa 25 bis 50% ihrer ursprünglichen Dicke komprimiert wird.

In einer besonderen Ausbildung kann die Trennfolie zur Verbesserung der akustischen Eigenschaften auch zumindest zweischichtig ausgebildet werden, wobei die dem Tür-Trockenraum zugewandte Lage aus einem offenporigen Kunststoffschaum, insbesondere aus einem Polyolefin, vorzugsweise aus Polyethylen, besteht.

Bei einem besonders bevorzugten erfindungsgemäßen Türmodul ist mindestens eines der Funktionselemente im Tür-Trockenraum als elektrischer Antrieb (Motor/Getriebe) eines Fensterheber, vorzugsweise einschließlich (elektronischer) Steuerung und Bedieneinrichtung, ausgebildet, der am Dekor-Verkleidungsteil und/oder einem mit diesem verbundenen Verstärkungselement befestigt ist und dessen Abtriebswelle die Trennfolie in Y-Richtung gedichtet, aber drehbar durchdringt. Durch die Ausrichtung der beispielsweise mit einer Außenverzahnung versehenen Abtriebswelle kann diese bei der Montage in ein mit einer Innenverzahnung versehenes Gegenstück des mechanischen Teils des Fensterhebers eingeführt werden. Konische Bereiche an Abtriebswelle und/oder Gegenstück erleichtern dabei die Selbstfindung der momentübertragenden Verbindung.

Die Erfindung betrifft ferner eine Fahrzeugtür mit einem derartigen Türmodul, bei welchem das Türinnenblech der Rohbautür vorzugsweise einen großflächigen, sich über einen Wesentlichen Teil des Türinnenblechs erstreckenden Ausschnitt aufweist. Ein derartiger Ausschnitt erleichtert einerseits den Einbau der Türkomponenten und reduziert andererseits das Gewicht der Fahrzeugtür. Dabei beträgt die Fläche des Ausschnitts mit Vorteil mindestens 50%, bevorzugt etwa 70% des vom Türmodul überdeckten Bereichs des Türinnenblechs. Der Einbau der teilweise sperrigen Türkomponenten wird naturgemäß dadurch erleichtert, dass der Ausschnitt frei von in seinem Querschnitt verlaufenden Verstrebungen ist.

### Figuren

Es zeigen:
- Fig. 1: eine innenraumseitige Ansicht einer ausgestatteten Fahrzeugtür
- Fig. 2: die naßraumseitige Ansicht des zur Montage an der Rohbautür vorbereiteten Türmoduls
- Fig. 3: das Türmodul nach Anspruch 2 nach Entfernen der Trennfolie
- Fig. 4: die Ansicht eines isolierten Verstärkungselements
- Fig. 5: einen Blick auf das Türinnenblech der Fahrzeugtür mit abgenommenem Türmodul
- Fig. 6: den Schnitt X-X durch die Fahrzeugtür nach Fig. 1
- Fig. 7: eine vergrößerte Ansicht eines ersten Anschlusses zwischen Türinnenblech und einem Türmodul
- Fig. 8: einen erfindungsgemäß ausgeführten Anschluß
- Fig. 9: eine weitere erfindungsgemäß gestaltete Anschlußsituation
- Fig. 10: eine mögliche Ausbildung von Verbindungsmitteln zur Verbindung von elektrischem Antrieb und Mechanik eines Fenstershebers vor der Montage
- Fig. 11: die Verbindungsmittel nach Fig. 10 in gefügtem Zustand

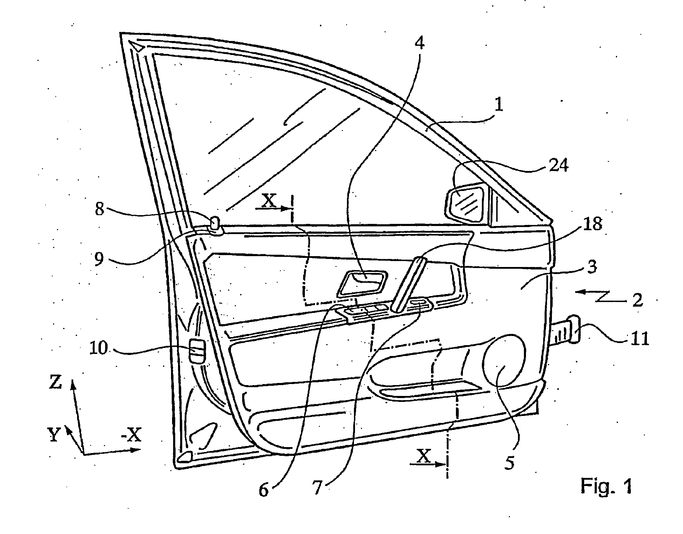

Die in Fig. 1 dargestellte linksseitige Fahrzeugtür besteht aus einer üblicherweise aus Stahlblech gefertigten Rohbautür 1, die auf ihrer dem Fahrzeuginnenraum zugewandten Seite mit einem Türmodul 2 versehen ist. In der Ansicht nach Fig. 1 sind vom Türmodul die innenraumseitige Dekor-Innenverkleidung 3 sowie mehrere im Türmodul 2 angeordnete Funktionselemente zu sehen, nämlich ein Türöffner 4, ein Lautsprecher 5, eine Schalterblende 6 mit Schaltereinheiten 7 und ein Türsicherungsstift 8 in einer Stiftblende 9.

Die Rohbautür 1 weist ihrerseits Türkomponenten auf, von denen in Fig. 1 die vom Türöffner 4 betätigbare Türschloßfalle 10 sichtbar ist. Ein mit der Karosserie verbindbarer Kabelstrang 11 dient der Übertragung von Energie und Informationen aus dem Fahrzeug in die Fahrzeugtür.

Fig. 1 zeigt weiter das übliche X, Y, Z-Koordinatensystem eines Kraftfahrzeugs. Die Hinweise auf eine Y-Orientierung bei der Montage gelten sinngemäß für die rechtsseitige Tür in (-Y)-Richtung.

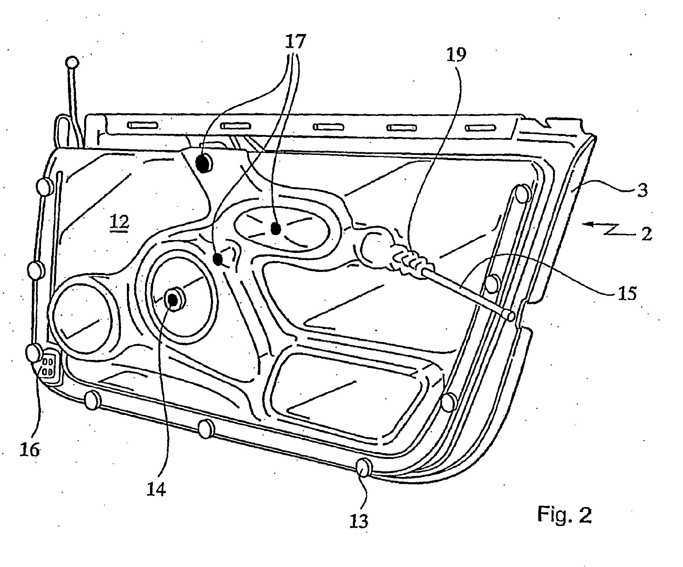

Wie aus Fig. 2 ersichtlich, ist das wannenartigen Türmodul 2 auf seiner nach außen weisenden Seite mittels einer Trennfolie 12 wasserdicht verschlossen. Die Trennfolie 12 wird einerseits von U-förmig um das Dekor-Innenverkleidungsteil 3 umlaufend angeordneten, zur Rohbautür 1 weisenden Rasthaken 13 und andererseits von Verbindungsmitteln zur mechanischen und elektrischen Verbindung der im Türmodul 2 befindlichen Funktionselemente mit den in der Rohbauteil angeordneten Türkomponenten durchdrungen. Zu den Verbindungsmitteln gehören die Abtriebswelle 14 zur elektrischen Betätigung eines Fensterhebers, der Bowdenzug 15, welcher den Türöffner 4 mit der Türschloßfalle 10 verbindet sowie eine Steckverbindung 16 zur Daten- und Energieübertragung zwischen Kabelstrang 11 und dem Türmodul 2.

Die Trennfolie 12 weist ferner Durchbrüche im Bereich von Schraubdomen 17 auf, welche der mechanischen Anbindung eines innenraumseitigen Haltegriffs 18 (siehe Fig. 1) und des Türöffners 4 an die Rohbautür 1 oder darin angeordnete Türkomponenten dienen.

Obwohl sich sowohl der Bowdenzug 15 als auch die Abtriebswelle 14 relativ zur Trennfolie 12 bewegen müssen, sind die betreffenden Durchbrüche ebenso wie die Durchbrüche der Schraubdome 17 und Rasthaken 13 wasserdicht ausgebildet, wie noch nachfolgend beschrieben. Zur Abdichtung des Bowdenzugs 15 dient dabei ein an die Trennfolie 12 angeformter Balgen 19.

Das Türmodul 2 wird in der in Fig. 2 gezeigten Fertigungsstufe vom Lieferanten an den Fahrzeughersteller übergeben und von diesem am Endmontageband des Fahrzeugs bereitgestellt.

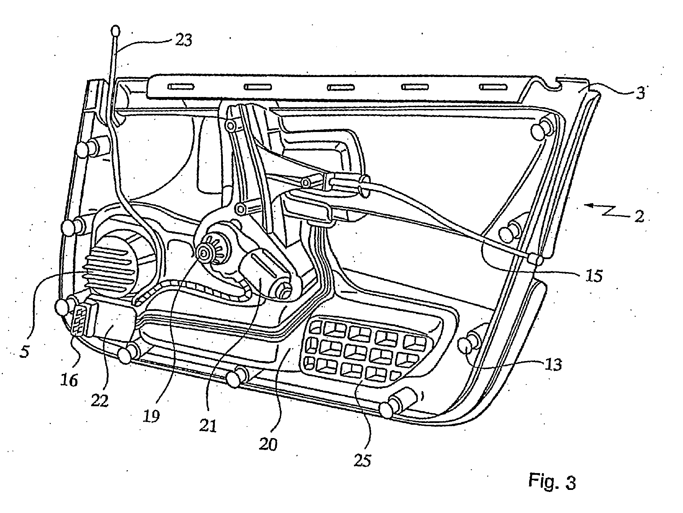

Der zwischen Trennfolie 12 und Dekor-Innenverkleidung 3 gebildete Tür-Trockenraum nimmt, wie in Fig. 3 dargestellt, das mit der DekorInnenverkleidung 3 verbundene Verstärkungselement 20 sowie unmittelbar an der Dekor-Innenverkleidung 3 oder am Verstärkungselement 20 verankerte Funktionselemente auf, von denen der elektrische Antrieb 21 (Motor/Getriebeeinheit) für den Fensterheber sowie die Türsteuereinheit 22 nach Entfernen der Trennfolie erstmals sichtbar werden. Von letztgenannter reicht ein weiterer Kabelstrang 23 zum elektrisch einstellbaren und/oder beheizbaren Außenspiegel 24 (siehe Fig. 1) der Fahrzeugtür.

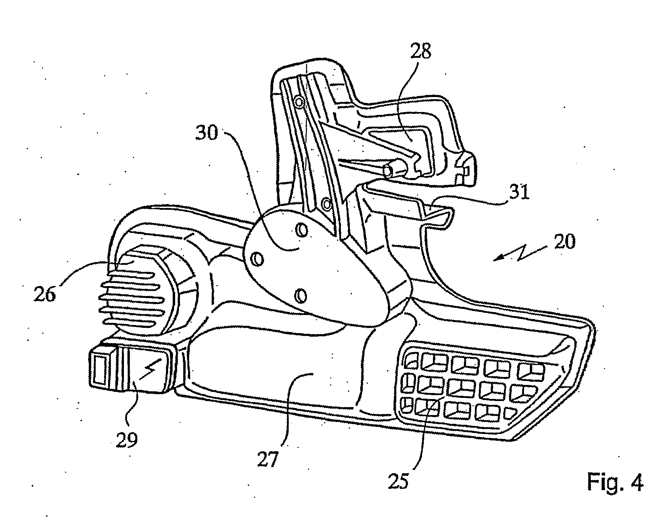

Das Verstärkungselement 20 ist mit einer in Fig. 3 und 4 erkennbaren, blockartig zusammengefaßten Rippenstruktur 25 versehen, die der Verbesserung des Unfallschutzes bei einem Seitenaufprall dient. Das vorzugsweise als Spritzgießteil aus glasfaserverstärktem Polypropylen (PP-GF) ausgeführte Verstärkungselement 20 kann geometrisch sehr komplex gestaltet werden. Daher ist vorgesehen, außer der Rippenstruktur 25 auch die topfartige Aufnahme 26 für den Lautsprecher 5, die Türinnenschale 27, einen Türöffnerrahmen 28, das Gehäuse 29 für die Steckverbindung 16 und die Türsteuereinheit 22 sowie Montagebrücken 30, 31 für den elektrischen Antrieb 21 bzw. die Schalterblende 6 einstückig an das Verstärkungselement 20 anzuformen.

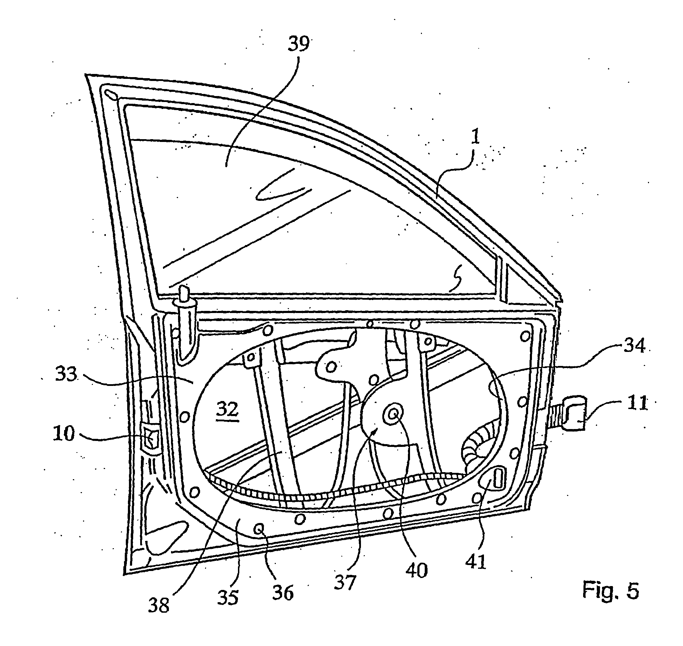

Die in Fig. 5 gezeigte Metallstruktur der Fahrzeugtür besteht aus der Rohbautür 1 mit einem Türaußenblech 32 und einem Türinnenblech 33, das mit einem großzügigen Ausschnitt 34 versehen ist. Das den Ausschnitt 34 umgebende Türinnenblech 33 bildet einen Dichtungsflansch 35 mit Clipsöffnungen 36 aus, in welche die Rasthaken 13 des Türmoduls 2 in Y-Richtung einsetzbar sind. Im Anschluß an diese Montage liegt die Trennfolie 12 bevorzugt unmittelbar, also ohne zwischengelegte Dichtprofile, dichtend am Dichtungsflansch 35 an.

Zwischen Türinnenblech 33 und Türaußenblech 32 sind Türkompenten, beispielsweise die Mechanik 37 des Fensterhebers sowie die Führungsschienen 38 für die vertikal verschiebliche Seitenscheibe 39 angeordnet, die durch den großzügig bemessenen Ausschnitt 34 problemlos im Tür-Naßraum 44 montierbar sind. Die Mechanik 37 weist ein Gegenstück 40 zur Abtriebswelle 14 des verkleidungsseitig angeordneten elektrischen Antriebs 21 auf, in welches die Antriebswelle 14 bei der Montage des Türmoduls in Y-Richtung bevorzugt selbstfindend einschiebbar ist. Eine kongruente, achsparallel verlaufende Verzahnung von Abtriebswelle 14 und Gegenstück 40 ermöglicht die Übertragung des Drehmoments, ohne einem Einschieben entgegenzustehen. In ein weiteres Gegenstück 41 wird dabei ferner die Steckverbindung 16 gefügt. Der Bowdenzug 15 muß zuvor manuell mit der Türschloßfalle 10 gekoppelt werden.

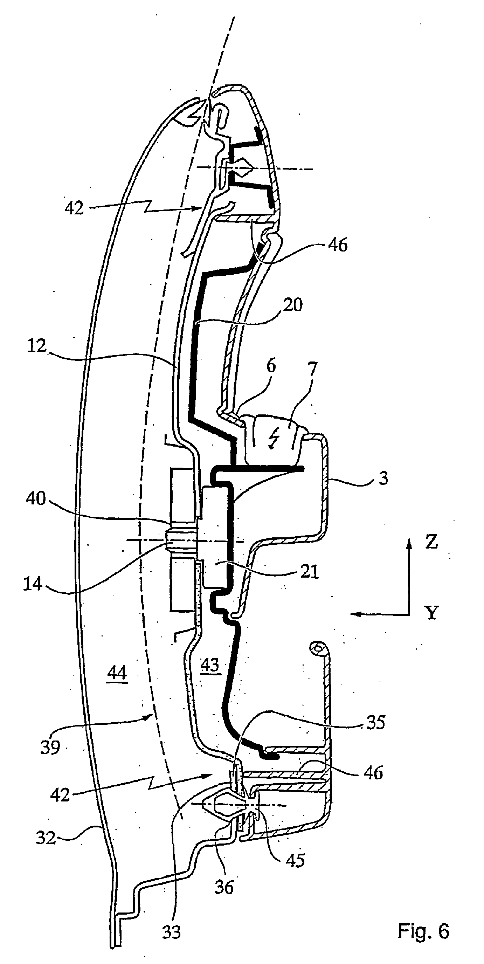

Im Längsschnitt nach Fig. 6 ist der Aufbau der montierten Fahrzeugtür im Detail erkennbar. Besonderes Augenmerk gilt dabei den als Anpreßzonen ausgebildeten Übergängen 42 zwischen Dekor-Innenverkleidung 3, Trennfolie 12 und Türinnenblech 33, die für die Abdichtung zwischen Tür-Trockenraum 43 und Tür-Naßraum 44 maßgeblich sind.

Durch an der Dekor-Innenverkleidung 3 umlaufend angeordnete, sich horizontal nach außen erstreckende Rasthaken 13 in Form von Clipsen 45 wird nach deren Einsetzen in die türseitigen Clipsöffnungen 36 eine in Y-Richtung wirkende Anpreßkraft zwischen Dekor-Innenverkleidung 3 und Türinnenblech 33 erzeugt, die über die dazwischenliegende, geschlossenzellig geschäumte Trennfolie 12 übertragen wird. Durch einen an die Dekor-Innenverkleidung angeformten, sich im Bereich des Dichtungsflansches 35 des Türinnenblechs 33 nach außen (Y-Richtung) umlaufend erstreckenden, rippenartigen Vorsprung 46 wird die Anpreßkraft linienförmig in die Trennfolie 12 eingeleitet, wobei örtlich eine hohe Pressung mit entsprechend großer Abdichtwirkung erzeugt wird. Die Clipse 45 sind außerhalb des rippenartigen Vorsprungs 46 und damit auch außerhalb des Tür-Trockenraums 43 angeordnet.

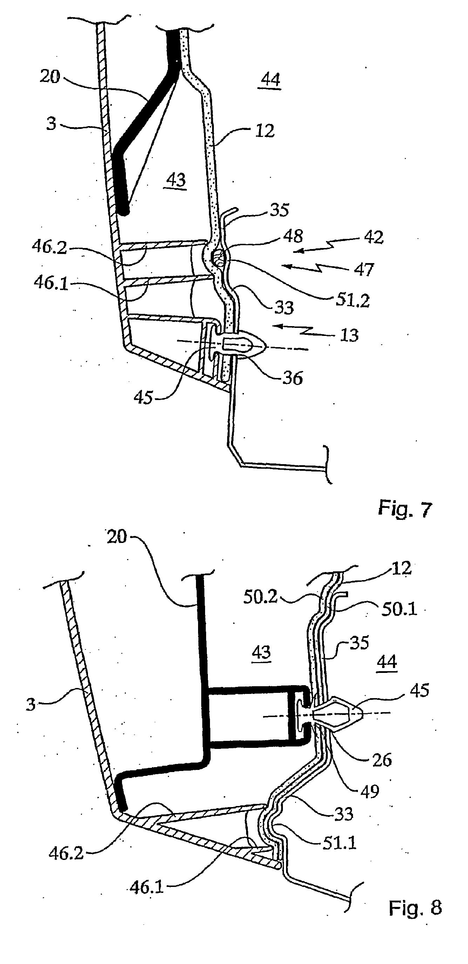

Fig. 7 zeigt eine weitere Ausbildung des Übergangs 42, bei welchem zwei zueinander radial beanstandete rippenartige Vorsprünge 46.1, 46.2 umlaufend an der Dekor-Innenverkleidung 3 angeordnet sind. In den Abstand zwischen den rippenartige Vorsprünge 46.1, 46.2 ist auf der dem Dichtungsflansch 35 zugewandten Seite der Trennfolie 12 ein Dichtmittel 47 in Form einer plastisch verformbaren Dichtstoffraupe 48 aufgetragen, dass vor der Montage mit einer abziehbaren Schutzfolie abdeckbar ist. Nach deren Entfernen und Montage des Türmoduls 2 ist die Dichtstoffraupe 48 in Kontakt mit dem Türinnenblech 33 bringbar.

In Fig. 8 ist eine erfindungsgemäß Ausführung des Übergangs 42 dargestellt, bei welchem die Clipse 45 diesseits der rippenförmigen Vorsprünge 46.1, 46.2, also innerhalb des Tür-Trockenraums 43 angeordnet und daher gesondert abzudichten sind. Hierzu sind die Clipse 45 im Kopfbereich mit einem umlaufenden, sich nach außen vorwölbenden Dichtkragen 49 versehen, der die Trennfolie 12 kreislinenförmig auf den Dichtungsflansch 35 preßt. Die Trennfolie 12 ist in diesem Ausführungsbeispiel zweischichtig aufgebaut, wobei die dem Tür-Naßraum 44 zugewandte Lage 50.1 geschlossenzelllig und damit wasserdicht, die zum Tür-Trockenraum weisende Lage 50.2 hingegen offenzellig und damit akustisch aktiv ausgebildet ist. Die Clipse 45 sind kopfseitig in ein Verstärkungselement 20 eingelassen, dass seinerseits mit der Dekor-Innenverkleidung 3 verschweißt ist. Der Dichtungsflansch 35 des Türinnenblechs 33 ist im Abstand zwischen den rippenartigen Vorsprüngen 46.1, 46.2 mit einer nach innen, also in Richtung des Dekor-Innenverkleidung gerichteten Auswölbung 51.1 versehen, durch welche die Abdichtung bei einem Verzicht auf Dichtmittel 47 verbessert wird. Beim Einsatz einer Dichtstoffraupe 48 (Fig. 7) kann das Türinnenblech hingegen mit einer zum Tür-Naßraum weisenden Auswölbung 51.2 versehen werden, um zwischen Trennfolie 12 und Dichtungsflansch 35 einen Raum für die Dichtstoffraupe 48 zu schaffen.

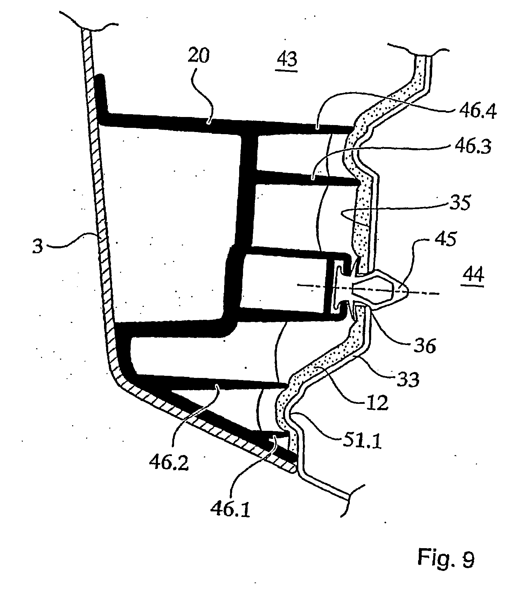

Das Ausführungsbeispiel nach Fig. 9 weicht insofern von den zuvor beschriebenen Ausbildungen ab, als sowohl die rippenartigen Vorsprünge 46 (in diesem Fall zwei Paare 46.1/46.2 und 46.3/46.4, welche den Clips 45 einschließen) als auch die Aufnahme für den Clips 45 am Verstärkungselement 20 angeordnet sind.

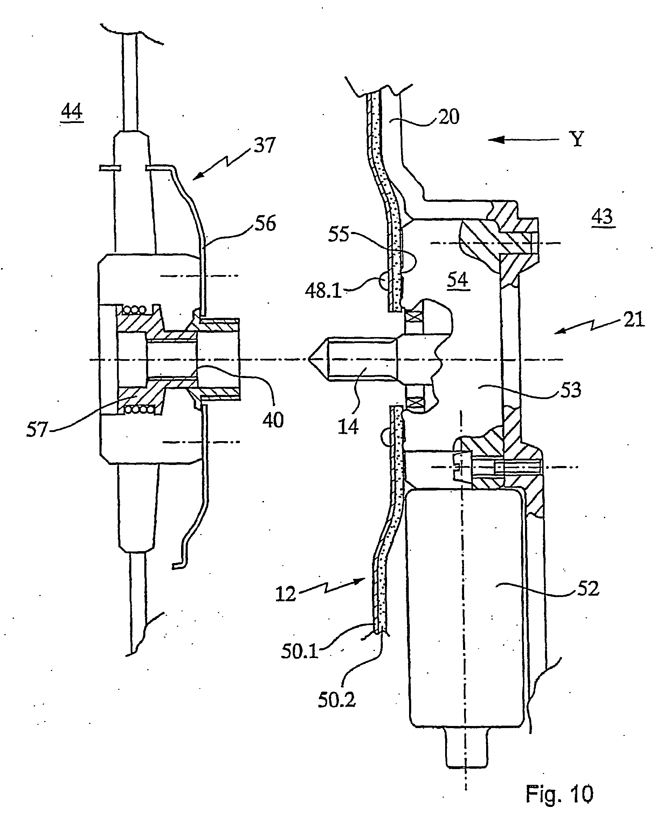

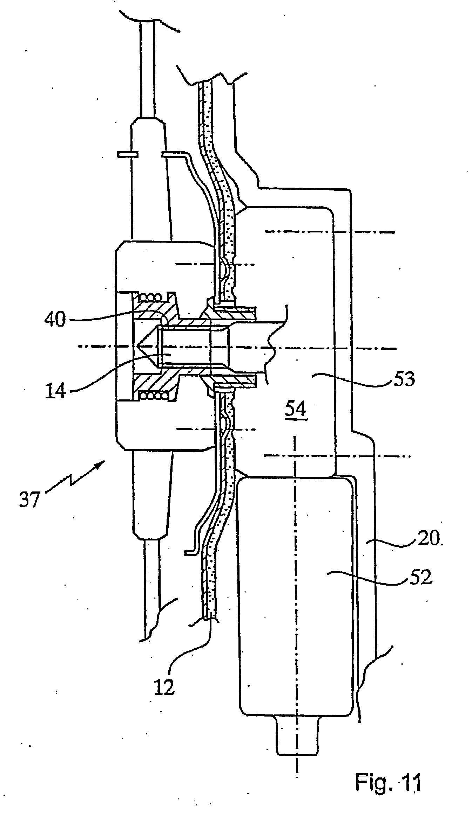

In den letzten Figuren ist die Verbindung zwischen elektrischem Antrieb 21 und Mechanik 37 des Fensterhebers vor (Fig. 10) und nach (Fig. 11) der Montage des Türmoduls 2 dargestellt.

Der elektrische Antrieb 21 besteht aus einem Elektromotor 52 mit einem orthogonal zur Y-Richtung gelagerten Rotor und einem Winkelgetriebe 53 mit einer in Y-Richtung verlaufenden, endseitig konisch zugespitzen Abtriebswelle 14 mit Außenverzahnung, die im Winkelgetriebe 53 gedichtet gelagert ist. Das Gehäuse 54 des Winkelgetriebes 53 ist auf seiner zum Tür-Naßraum 44 weisenden Seite mit ringförmig umlaufenden Vorsprüngen 55 versehen, durch welche die dazwischenliegende Trennfolie 12 (ggf. unter Einsatz einer weiteren Dichtstoffraupe 48.1) an die Metallstruktur der Mechanik 37 preßbar ist. Die Mechanik 37 umfaßt ihrerseits das Gegenstück 40 mit Innenverzahnung, das drehfest mit der Seiltrommel 57 des Fensterhebers verbunden ist.

Bei der Montage des Türmoduls kommt der über alle weiteren Bauteile (z. B. die Clipse 45) herausragenden Abtriebswelle 14 eine besondere Bedeutung zu, da diese den primären, relativ einfach zu findenden Positionierpunkt für die Ausrichtung des Türmoduls darstellt. Erst nachdem die Abtriebswelle 14 ein Stück weit in das Gegenstück 40 eingeschoben wurde, wird durch Verdrehen des Türmoduls 2 eine Zentrierung der Clipse 45 und der Clipsöffnungen 36 sowie der übrigen Verbindungselemente (z. B. Steckverbindung 16) herbeigeführt.

Ist für die Montage hingegen ein anderer Positionierpunkt vorgesehen, empfiehlt es sich, die Abtriebswelle 14 oder das Gegenstück 40 in X- und Z-Richtung schwimmend zu lagern, um ein Verspannen zu vermeiden.

### Bezugszeichen

- 1: Rohbautür
- 2: Türmodul
- 3: Dekor-Innenverkleidung
- 4: Türöffner
- 5: Lautsprecher
- 6: Schalterblende
- 7: Schaltereinheit
- 8: Türsicherungsstift
- 9: Stiftblende
- 10: Türschloßfalle
- 11: Kabelstrang
- 12: Trennfolie
- 13: Rasthaken
- 14: Abtriebswelle
- 15: Bowdenzug
- 16: Steckverbindung
- 17: Schraubdom
- 18: Haltegriff
- 19: Balgen
- 20: Verstärkungselement
- 21: elektrischer Antrieb
- 22: Türsteuereinheit
- 23: Kabelstrang
- 24: Außenspiegel
- 25: Rippenstruktur
- 26: Aufnahme
- 27: Türinnenschale
- 28: Türöffnerrahmen
- 29: Gehäuse
- 30, 31: Montagebrücke
- 32: Türaußenblech
- 33: Türinnenblech
- 34: Ausschnitt
- 35: Dichtungsflansch
- 36: Clipsöffnungen
- 37: Mechanik (des Fensterhebers)
- 38: Führungsschienen
- 39: Seitenfenster
- 40, 41: Gegenstück
- 42: Übergang
- 43: Tür-Trockenraum
- 44: Tür-Naßraum
- 45: Clips
- 46: rippenartiger Vorsprung
- 47: Dichtmittel
- 48: Dichtstoffraupe
- 49: Dichtkragen
- 50: Lage
- 51: Auswölbung
- 52: Elektromotor
- 53: Winkelgetriebe
- 54: Gehäuse
- 55: Vorsprung
- 56: Metallstruktur
- 57: Seiltrommel

## Patentansprüche

1. Türmodul (2) für eine Fahrzeugtür, die in einen äußeren, der Rohbautür (1) zugewandten Tür-Naßraum (44) und einen inneren Tür-Trockenraum (43) gedichtet unterteilt ist, mit am Türmodul im Tür-Trockenraum vormontiert gehalterten mechanischen und/oder elektrischen Funktionskomponenten, die mit im Tür-Naßraum angeordneten Türkomponenten mechanisch und/oder elektrisch verbindbar sind, wobei die Abdichtung zwischen Tür-Trockenraum und Tür-Naßraum durch eine Trennfolie (12) gebildet wird, die von den Verbindungsmitteln der diesseits der Trennfolie am Türmodul gehalterten Funktionskomponenten gedichtet durchdrungen wird, wobei die Dekor-Innenverkleidung (3) des Türmoduls (2) und/oder ein darauf angeordnetes Verstärkungselement (20) am Türmodul bevozugt vollumfänglich umlaufende Anpresszonen aufweist, an welche die Trennfolie (12) durch Anlage an der Rohbautür (1) dichtend angepresst wird, **dadurch gekennzeichnet, dass**, das Türmodul (2) und/oder das Verstärkungselement (20) über innerhalb der umlaufenden Anpresszonen gedichtet angeordnete Clipse (45) mit der Rohbaurtür (1) verbunden ist.

2. Türmodul nach Anspruch 1, **dadurch gekennzeichnet, dass** die Clipse (45) im Kopfbereich jeweils mit einem umlaufenden, sich nach außen vorwölbenden und auf die Trennfolie pressenden Dichtkragen (49) versehen sind, der die Trennfolie (12) kreislinaförmig auf einen Dichtungsflansch (35) des Rohbautür (1) presst.

3. Türmodul nach Anspruch 1 oder 2, **dadurch gekennzeichnet, dass** die Funktionskomponenten und/oder die Verbindungsmittel zumindest teilweise unmittelbar an der zum Trockenraum (43) weisenden Flächenseite einer Dekor-Innenverkleidung (3) des Türmoduls (2) angeordnet sind.

4. Türmodul nach Anspruch 3, **dadurch gekennzeichnet, dass** die Funktionskomponenten und/oder die Verbindungsmittel zumindest teilweise an einem Verstärkungselement (20) angeordnet sind, das seinerseits mit der Dekor-Innenverkleidung (3) des Türmoduls (2) verbunden ist.

5. Türmodul nach einem der vorhergehenden Ansprüche, **dadurch gekennzeichnet, dass** das Türmodul (2) unter Ausbildung der mechanischen und/oder elektrischen Verbindung zwischen Funktions- und Türkomponenten in Y-Richtung mit der Rohbautür (1) verrastet ist.

6. Türmodul nach einem der vorhergehenden Ansprüche, **dadurch gekennzeichnet, dass** die Trennfolie (12) am Türmodul (2) vormontiert und gemeinsam mit diesem an der Rohbautür (1) angebracht ist.

7. Türmodul nach einem der vorhergehenden Ansprüche, **dadurch gekennzeichnet, dass** die Anpresszone sich nach außen erstreckende rippenartige Vorsprünge (46) von Dekor-Innenverkleidung (3) und/oder Verstärkungselement (20) umfasst.

8. Türmodul nach Anspruch 7, **dadurch gekennzeichnet, dass** die Anpresszone zwei zueinander beabstandete rippenartige Vorsprünge (46.1), (46.2) aufweist, an welche die Trennfolie (12), ggf. unter Einbringung eines Dichtmittels (47), in deren Abstand angepresst wird.

9. Türmodul nach Anspruch 8, **dadurch gekennzeichnet, dass** das Dichtmittel (47) jenseits der rippenartigen Vorsprünge (46.1), (46.2) auf der Trennfolie (12) angeordnet und bei der Montage des Türmoduls (2) in Kontakt mit dem Türinnenblech (33) gebracht wird.

10. Türmodul nach Anspruch 9, **dadurch gekennzeichnet, dass** das Dichtmittel (47) eine Dichtstoffraupe (48) umfasst, die vor der Montage des Türmoduls (2) mit einer abziehbaren Schutzfolie abgedeckt ist.

11. Türmodul nach einem der vorhergehenden Ansprüche, **dadurch gekennzeichnet, dass** die Trennfolie (12) zumindest eine Lage (50.1) aus einem geschlossenzelligen Kunststoffschaum, insbesondere aus einem Polyolefin, vorzugsweise aus Polyethylen, umfasst.

12. Türmodul nach einem der vorhergehenden Ansprüche, **dadurch gekennzeichnet, dass** die Trennfolie (12) zumindest zweilagig ausgebildet ist, wobei die dem Tür-Trockenraum (43) zugewandte Lage (50.2) aus einem offenporigen Kunststoffschaum, insbesondere aus einem Polyolefin, vorzugsweise aus Polyethylen, besteht.

13. Türmodul nach einem der vorhergehenden Ansprüche, **dadurch gekennzeichnet, dass** eines der Funktionselemente im Tür-Trockenraum (43) als elektrischer Antrieb (21) eines Fensterhebers, vorzugsweise einschließlich Steuerung und Bedieneinrichtung, ausgebildet ist, der an der Dekor-Innenverkleidung (3) und/oder einem mit diesem verbundenen Verstärkungselement (20) befestigt ist und dessen Abtriebswelle (14) die Trennfolie in Y-Richtung gedichtet, aber drehbar durchdringt.

14. Fahrzeugtür mit einem Türmodul (2) nach einem der vorhergehenden Ansprüche.

15. Fahrzeugtür nach Anspruch 14, **dadurch gekennzeichnet, dass** das Türinnenblech (33) der Rohbautür (1) einen großflächigen, sich über einen wesentlichen Teil des Türinnenblechs erstreckenden Ausschnitt (34) aufweist.

16. Fahrzeugtür nach Anspruch 15, **dadurch gekennzeichnet, dass** die Fläche des Ausschnitts (34) mindestens 50%, bevorzugt etwa 70% des vom Türmodul (2) überdeckten Bereichs des Türinnenblechs (33) beträgt.

17. Fahrzeugtür nach Anspruch 15 oder 16, **dadurch gekennzeichnet, dass** der Ausschnitt (34) frei von in seinem Querschnitt verlaufenden Verstrebungen ist.

## Claims

1. Door module (2) for a vehicle door, which is divided in a sealed manner into an outer wet door chamber (44), facing the door shell (1), and an inner dry door chamber (43), with mechanical and/or electrical functional components that are secured in a preassembled manner on the door module in the dry door chamber and can be mechanically and/or electrically connected to door components arranged in the wet door chamber, the seal between the dry door chamber and the wet door chamber being formed by a separating sheet (12) which is penetrated in a sealed manner by the connecting means of the functional components secured on the door module on the near side of the separating sheet, wherein the interior decorative trim (3) of the door module (2) and/or a reinforcing element (20) arranged on it have contact pressure zones which preferably extend over the whole periphery of the door module and onto which the separating sheet (12) can be pressed in a sealing manner by contact with the door shell (1), **characterized in that** the door module (2) and/or the reinforcing element (20) is connected to the door shell (1) by means of clips (45) arranged in a sealed manner within the peripheral contact pressure zones.

2. Door module according to Claim 1, **characterized in that** the clips (45) are respectively provided in the head region with a peripheral, convexly curved sealing collar (49), which presses on the separating sheet (12), pressing it onto a sealing flange (35) of the door shell (1) along a circular line.

3. Door module according to Claim 1 or 2, **characterized in that** the functional components and/or the connecting means are at least partly arranged directly on the flat side of an interior decorative trim (3) of the door module (2) that is facing the dry chamber (43).

4. Door module according to Claim 3, **characterized in that** the functional components and/or the connecting means are at least partly arranged on a reinforcing element (20), which for its part can be connected to the interior decorative trim (3) of the door module (2).

5. Door module according to one of the preceding claims, **characterized in that** the door module (2) can be engaged in a latching manner with the door shell (1) in the Y direction while forming the mechanical and/or electrical connection between the functional components and the door components.

6. Door module according to one of the preceding claims, **characterized in that** the separating sheet (12) is preassembled on the door module (2) and is fitted together with the latter on the door shell (1).

7. Door module according to one of the preceding claims, **characterized in that** the contact pressure zone comprises rib-like projections (46) extending outward, from the interior decorative trim (3) and/or the reinforcing element (20).

8. Door module according to Claim 7, **characterized in that** the contact pressure zone has two rib-like projections (46.1), (46.2), onto which the separating sheet (12) can be pressed, if appropriate while a sealant (47) is introduced into the spacing between them.

9. Door module according to Claim 8, **characterized in that** the sealant (47) is arranged on the far side of the rib-like projections (46.1), (46.2) on the separating sheet (12) and is brought into contact with the inner door panel (33) during the assembly of the door module (2).

10. Door module according to Claim 9, **characterized in that** the sealant (47) comprises a bead of sealant (48) which, before the assembly of the door module (2), is covered with a peel-off protective film.

11. Door module according to one of the preceding claims, **characterized in that** the separating sheet (12) comprises at least one layer (50.1) of a closed-cell plastic foam, in particular of a polyolefin, preferably of polyethylene.

12. Door module according to one of the preceding claims, **characterized in that** the separating sheet (12) is formed with at least two layers, the layer (50.2) facing the dry door chamber (43) consisting of an open-cell plastic foam, in particular of a polyolefin, preferably of polyethylene.

13. Door module according to one of the preceding claims, **characterized in that** one of the functional elements in the dry door chamber (43) is formed as an electrical drive (21) of a window lifter, preferably including a control system and an operating device, which is fastened to the interior decorative trim (3) and/or a reinforcing element (20) connected to the latter and the driven shaft (14) of which penetrates through the separating sheet in the Y direction in a sealed manner but rotatably.

14. Vehicle door with a door module (2) according to one of the preceding claims.

15. Vehicle door according to Claim 14, **characterized in that** the inner door panel (33) of the door shell (1) has a large-area cutout (34) extending over a significant part of the inner door panel.

16. Vehicle door according to Claim 15, **characterized in that** the surface area of the cutout (34) is at least 50%, preferably approximately 70%, of the region of the inner door panel (33) that is covered by the door module (2).

17. Vehicle door according to Claim 15 or 16, **characterized in that** the cutout (34) is free from struts running in its cross section.

## Revendications

1. Module de porte (2) pour une porte de véhicule, qui est divisée en un espace humide de porte (44) extérieur, tourné vers la structure brute de la porte (1) et un espace sec de porte intérieur (43), avec des composants fonctionnels mécaniques et/ou électriques prémontés dans l'espace sec de la porte et fixés sur le module de porte, l'étanchéité entre l'espace sec de la porte et l'espace humide de la porte étant réalisée par une feuille de séparation (12), qui est traversée de manière étanche par les moyens de connexion des composants fonctionnels fixés de ce côté de la feuille de séparation sur le module de porte, l'habillage décoratif intérieur (3) du module de porte (2) et/ou un élément de renforcement (20) disposé par dessus sur le module de porte présentant des zones de pressage périphériques, de préférence sur toute la périphérie, contre lesquelles la feuille de séparation (12) est pressée de manière hermétique par application contre la structure brute de la porte (1), **caractérisé en ce que** le module de porte (2) et/ou l'élément de renforcement (20) sont connectés à la structure brute de la porte (1) par le biais de clips (45) disposés hermétiquement à l'intérieur des zones de pressage périphériques.

2. Module de porte selon la revendication 1, **caractérisé en ce que** les clips (45) sont pourvus dans la région de tête à chaque fois d'un collet d'étanchéité (49) périphérique, comprenant un précintrage vers l'extérieur et pressant sur la feuille de séparation, lequel presse la feuille de séparation (12) suivant une ligne circulaire sur une bride d'étanchéité (35) de la structure brute de la porte (1).

3. Module de porte selon la revendication 1 ou 2, **caractérisé en ce que** les composants fonctionnels et/ou les moyens de connexion sont disposés au moins en partie directement sur le côté de la surface d'un habillage décoratif intérieur (3) du module de porte (2) tourné vers l'espace sec (43).

4. Module de porte selon la revendication 3, **caractérisé en ce que** les composants fonctionnels et/ou les moyens de connexion sont disposés au moins en partie sur un élément de renforcement (20) qui pour sa part est connecté à l'habillage décoratif intérieur (3) du module de porte (2).

5. Module de porte selon l'une quelconque des revendications précédentes, **caractérisé en ce que** le module de porte (2) est encliqueté à la structure brute de la porte (1) en effectuant la connexion mécanique et/ou électrique entre des composants fonctionnels et des composants de porte dans la direction Y.

6. Module de porte selon l'une quelconque des revendications précédentes, **caractérisé en ce que** la feuille de séparation (12) est prémontée sur le module de porte (2) et est appliquée conjointement avec celui-ci sur la structure brute de la porte (1).

7. Module de porte selon l'une quelconque des revendications précédentes, **caractérisé en ce que** la zone de pressage comprend des saillies (46) de l'habillage décoratif intérieur (3) et/ou de l'élément de renforcement (20), en forme de nervures s'étendant vers l'extérieur.

8. Module de porte selon la revendication 7, **caractérisé en ce que** la zone de pressage présente deux saillies (46.1), (46.2) en forme de nervures espacées l'une de l'autre, sur lesquelles la feuille de séparation (12), éventuellement avec interposition d'un moyen d'étanchéité (47), est pressé dans son étendue.

9. Module de porte selon la revendication 8, **caractérisé en ce que** le moyen d'étanchéité (47) est disposé de chaque côté des saillies (46.1), (46.2) en forme de nervures sur la feuille de séparation (12) et lors du montage du module de porte (2) est amené en contact avec la tôle intérieure de la porte (33).

10. Module de porte selon la revendication 9, **caractérisé en ce que** le moyen d'étanchéité (47) comprend un cordon en matériau d'étanchéité (48) qui est recouvert d'une couche de protection pouvant être retirée avant le montage du module de porte (2).

11. Module de porte selon l'une quelconque des revendications précédentes, **caractérisé en ce que** la feuille de séparation (12) comprend au moins une couche (50.1) constituée d'une mousse de plastique à pores fermés, en particulier de polyoléfine, de préférence de polyéthylène.

12. Module de porte selon l'une quelconque des revendications précédentes, **caractérisé en ce que** la feuille de séparation (12) est réalisée au moins en deux couches, la couche (50.2) tournée vers l'espace sec de la porte (43) se composant d'une mousse de plastique à pores ouverts, en particulier de polyoléfine, de préférence de polyéthylène.

13. Module de porte selon l'une quelconque des revendications précédentes, **caractérisé en ce que** l'un des éléments fonctionnels dans l'espace sec de la porte (43) est réalisé sous la forme d'un entraînement électrique (21) d'un lève-glace, de préférence avec une commande et un dispositif d'actionnement, qui est fixé sur l'habillage décoratif intérieur (3) ou sur un élément de renforcement (20) connecté à celui-ci et dont l'arbre de sortie (14) traverse la feuille de séparation de manière hermétique dans la direction Y, mais de façon à pouvoir tourner.

14. Porte de véhicule comprenant un module de porte (2) selon l'une quelconque des revendications précédentes.

15. Porte de véhicule selon la revendication 14, **caractérisée en ce que** la tôle intérieure de porte (33) de la structure brute de la porte (1) présente une section (34) de grande surface, s'étendant sur une partie considérable de la tôle intérieure de la porte.

16. Porte de véhicule selon la revendication 15, **caractérisée en ce que** la surface de la section (34) représente au moins 50%, de préférence environ 70% de la région de la tôle intérieure de la porte (33) recouverte par le module de porte (2).

17. Porte de véhicule selon la revendication 15 ou 16, **caractérisée en ce que** la section (34) est exempte de renforts s'étendant dans sa section transversale.
